# EUROPEAN PATENT SPECIFICATION

(11) **EP 0 440 230 B1**
(45) Date of publication and mention of the grant of the patent: **27.03.1996**
(21) Application number: 91101292.0
(22) Date of filing: 31.01.1991
(51) Int. Cl.: H04N 3/36, H04N 9/11, G11B 7/007

(54) **Television video signal converting apparatus and movie film image processing system**
Fernsehsignal-Umsetzeinrichtung und System zur Verarbeitung von Bildern eines Kinofilms
Convertisseur d'un signal de télévision et système de traitement d'images d'un pellicule cinématographique

(30) Priority: 31.01.1990 JP 20920/90
(43) Date of publication of application: 07.08.1991
(73) Proprietor: SONY CORPORATION, Tokyo (JP)
(72) Inventor: Osaki, Yoshio, c/o SONY CORPORATION, Shinagawa-ku, Tokyo (JP); Omata, Tomio, c/o SONY PLC INC., Tokyo (JP)
(74) Representative: Schmidt-Evers, Jürgen, Dipl.-Ing.

(56) References cited:
- DE-A- 2 921 934
- US-A- 3 814 850
- US-A- 4 149 191
- US-A- 4 496 990

## Description

### BACKGROUND OF THE INVENTION

This invention relates to a movie film image processing system and to a television video signal converting apparatus and more particularly to such an apparatus having a movie film from which a television video signal is obtained by means of video signal processing as required.

DE-A-29 21 934 teaches a system for TV compatible scanning of movie films, wherein the movie film is transported continuously and is scanned without interlacing, the signals corresponding to one scan line, respectively, being read in a frame buffer and read out according to TV standard.

US-A-4 496 990 discloses a film image to TV signal conversion system in which a first film image is converted into a first TV signal, the movie film comprising an identification film portion alternately disposing first frames and second frames on a portion of said movie film, said first frame being formed with a first pattern which is detectable from said first TV signal, said second frame being formed with a second pattern which is different from said first pattern, is detectable from a said first television video signal, and is distinguishable from said first pattern. However, US-A-4 496 990 is silent about the problem of so called 2-3 pulldown conversion described herein below.

In general, a movie film is fed at a frame feed speed of twenty-four (24) per second. In so-called "tele-cine" work in which the images of the movie film are converted into an NTSC television video signal providing 30 frames per second (60 fields per second), frame number conversion is carried out according to a so-called "2-3 puldown conversion system".

In preparing a movie film by using the television video signal which is video-signal-processed according to an electron beam image recording system for instance, the frame number conversion must be carried out in opposite to the above-describe one.

The frame number conversion is carried out twice as was described above. Therefore, with the movie film thus prepared, it is impossible to reproduce the frames in correspondence to those of the original movie film. Accordingly, in projection of the movie film, the movement of the frames is not in correspondence to that of the frames of the original movie film, as a result of which the image is projected flickers or sways. It is impossible for the method to avoid the unpleasant phenomenon completely.

This difficulty may be eliminated by the following method: The "tele-cine" work is carried out with the move film fed at a frame feed speed of 30 frames per second, and in preparing a movie film by using the television video signal the movie film is fed at the same frame feed speed of 30 frames per second. Therefore, in this case, the frame number conversion can be eliminated.

However, the method is still disadvantageous in the following point: The television video signal obtained through "tele-cine" work has a movement component 1.25 times as fast as the ordinary one, and therefore in composition of the television video signal obtained through "tele-cine" work and the television video signal having a movement component of ordinary speed, the resultant composed television video signal is unavoidably unnatural. Thus, the method is not practical in use.

### SUMMARY OF THE INVENTION

In view of the foregoing, an object of this invention is to provide a movie film image processing system and a television video converting apparatus with which, in the case where the images of the movie film are converted into a television video signal, and the television video signal thus obtained is video-signal-processed so as to be recorded on a new movie film, the image recording start timing can be detected with ease.

According to the invention there is provided a movie film image processing system comprising a movie film 1 fed at a frame feed speed of twenty-four frames per second, the images of which are converted into television video signal which is video-signal-processed in a predetermined manner, which, according to the invention, comprises: an identification film part 3 for reconversion formed in a predetermined portion of the front end part of the movie film in which first and second frames K_{W} and K_{B} which have first and second identifying patterns PW and PB, respectively, are arranged alternately.

The first and second frames K_{W} and K_{B} which have the first and second identifying patterns PW and PB, respectively, are arranged alternately in the predetermined portion of the front end part of the movie film. Hence, in the case where the images are converted into a television video signal, and the television video signal thus obtained is video-signal-processed so that the images be recorded on a movie film again, the image recording start timing can be readily detected from the first and second patterns PW and PB.

The nature, principle and utility of the invention will become more apparent from the following detailed description when read in conjunction with the accompany drawings in which like parts are designated by like reference numerals or characters.

### BRIEF DESCRIPTION OF THE DRAWINGS

In the accompanying drawings:
FIG. 1 is an explanatory diagram showing a movie film embodying this invention;
FIG. 2 is an explanatory diagram showing the identification film part of the move film;
FIGS. 3A through 3C are timing charts for a description of "tele-cine" work;
FIG. 4 is a block diagram showing the arrangement of an electron beam image recording processing device; and
FIGS. 5A through 5K are timing charts for a description of an electron beam image recording operation.

### DETAILED DESCRIPTION OF THE INVENTION

Preferred embodiments of this invention will be described with reference to the accompanying drawings.

### (1) Arrangement of a Movie Film Embodying the Invention

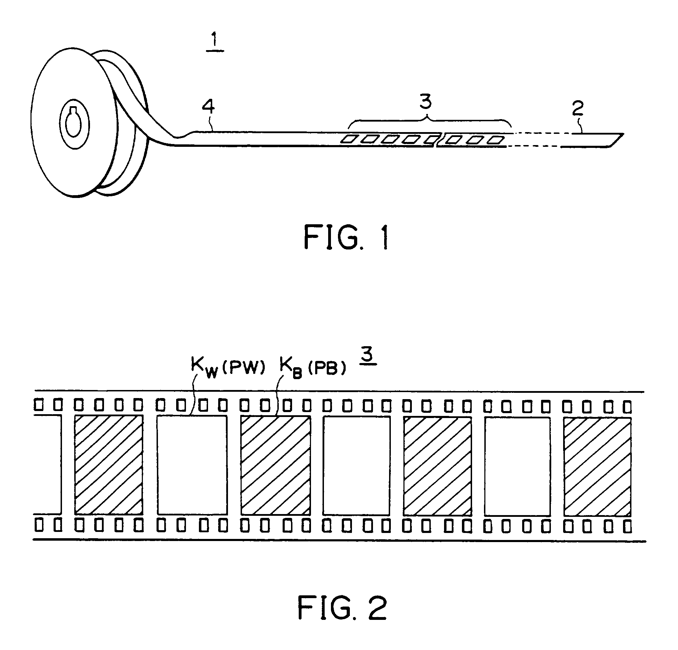

In FIG. 1, reference numeral 1 designates a 35 mm movie film whose a frame feed speed is 24 frames per second. The movie film 1 includes a leader part 2, an identification film part 3 of two feed which is connected to the leader part 2, and a film body 4 connected to the identification film part 3.

The identification film part 3, as shown in FIG. 2, includes a series of thirty-two frames in which a white frame K_{W} of a white solid pattern and a black frame K_{B} of a black solid pattern appears alternately. That is, the identification film part 3 is formed as follows. A white sheet and a black sheet are alternately photographed with a movie film until thirty-two (32) frames are formed on the film, and thereafter the film is subjected to developing.

In the case of the movie film 1 shown in FIG. 1, the identification film part 3 is bonded to the leader part 2 and to the front end of the film body 4 which has been exposed and developed.

### (2) Operation During "Tele-cine" Work

The actual "tele-cine" work using the movie film 1 is carried out according to a 2-3 puldown conversion method similarly as in the prior art.

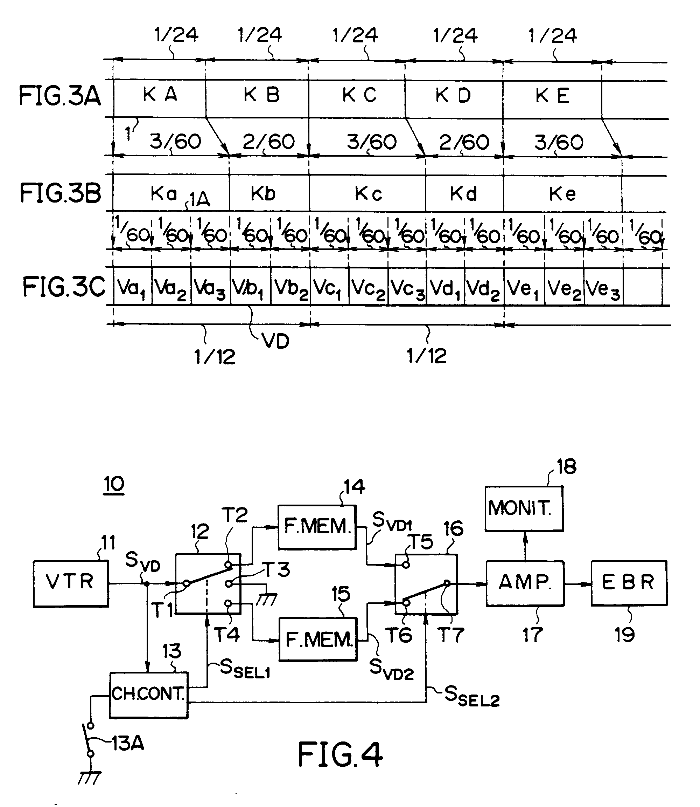

The movie film 1 (FIG. 3A) whose frame feed speed is 24 frames per second is handled by a film feed mechanism adapted to feed a movie film at non-uniform speed, as shown in FIGS. 3A through 3C. More specifically, as shown in FIG. 3B, an optional frame is held stopped for a period of time corresponding to three fields (i.e., 3/60 second), and the image pickup tube outputs a television video signal VD (FIG. 3C) for three (3) fields. The next frame is held stopped for a period of time corresponding to two (2) fields, while the image pickup tube outputs a television video signal VD (FIG. 3C) for two (2) fields. In FIG. 3A, the pictures of the frames of the movie film 1 to 24 frames per second are designated by KA, KB, KC, KD, KE, ..., respectively, beginning with the picture of the optional frame.

The pictures of the frames of the movie film 1, which is held stopped alternately for a period of time corresponding to three fields and for a period of time corresponding to two fields, being forwarded at non-uniform speed as was described above, are designated by reference characters Ka, Kb, Kc, Kd, ke, ..., respectively, as shown in FIG. 3B. Furthermore, the pictures of the fields of the television video signal VD outputted by the image pickup tube are designated by Va₁, Va₂, Va₃, Vb₁, Vb₂, Vc₁, Vc₂, Vc₃, Vd₁, Vd₂, Ve₁, Ve₂, Ve₃, ......., respectively, as shown FIG. 3C.

The above-described operation of converting two frames of a movie film 1 into television video signals VD of three and two fields is repeatedly carried out; that is, the "tele-cine" work is carried out according to the 2-3 puldown conversion method is carried out to achieve the "tele-cine" work, and the resultant television video signals VD are recorded on a HDVS video tape recorder (VTR).

The resultant television video signals VD together with other television video signals can be processed for image composition by using the video signal processing method. In this case, the image composition processing operation can be achieved much more readily than in the case of using the conventional optical processing method. In addition, employment of the digital effecter makes it possible to perform the special effect process which cannot be realized by the conventional optical method.

In the above-described embodiment, the "tele-cine" work is given to the identification film part 3 and the film body 4 following the leader part 2. That is, in the top part of the video tape image-recorded by the VTR, the white video signal (or black video signal) and the black video signal (or white video signal) are alternately recorded.

### (3) Operation During Electronic Beam Image Recording Process

The television video image signal which has been subjected to image composition process and special effect process after the "tele-cine" work is recorded on the video film again with an electron beam image recording processing device 10 as shown in FIG. 4.

The device 10 has a VTR 11 for playback of the video tape on which the television video signal VD subjected to image composition process has been recorded. The VTR 11 outputs a reproducing video signal S_{VD}, which is applied to an input terminal T1 of a first select circuit 12 and to a change-over control circuit 13.

The first select circuit 12 has a first output terminal T2 connected to a frame memory 14, a second output terminal T3 which is grounded, and a third output terminal T4 connected to a second frame memory 15.

The first through third output terminals T2 through T4 of the first select circuit 12 are selected separately according to change-over control signals provided by the change-over control circuit 13. When the first output terminal T2 is selected, the reproducing video signal S_{VD} applied to the input terminal T1 is applied to the first frame memory 14, where it, being delayed as much as one frame, is converted into reproducing video signal S_{VD1} , which is applied to a first input terminal T5 of a second select circuit 16. Similarly, when the third output terminal T4 of the first select circuit 12 is selected, the reproducing video signal S_{VD} applied to the input terminal T1 is applied to the second frame memory 15, where it, being delayed as much as one frame, is converted into a reproducing video signal S_{VD2} , which is applied to a second input terminal T6 of the second select circuit 16.

The change-over control circuit 13 detects the vertical synchronizing signal contained in the reproducing video signal S_{VD} applied thereto, to form a field pulse rising every 1/60 second and subjects the field pulse thus formed to 1/5 frequency division thereby to form a change-over control signal S_{SEL1} which, with respect to a period of time corresponding to five (5) fields from the time instant reset by operation of a reset switch 13A, selects the first output terminal T2 for a period of time corresponding to two (2) fields, the second output terminal T3 for the following period of time corresponding to one (1) field, and the third output terminal T4 for the following period of time corresponding to two (2) fields. The change-over control signal thus formed is applied to the first select circuit 12.

In addition, the change-over control circuit 13 forms a film pulse rising every 1/24 second according to the field pulse rising every 1/60 second. The film pulse thus formed is applied, as a change-over control signal S_{SEL2}, to the second select circuit 16.

The reproducing video signal S_{VD} provided at the output terminal T7 of the second select circuit 16 is applied through an amplifier circuit 17 to a monitor device 18 comprising a cathode ray tube and to a so-called "electron beam image recording unit (EBR)" Thus, the television video signal VD processed for image composition which has been recorded on the video tape can be recorded on the movie film.

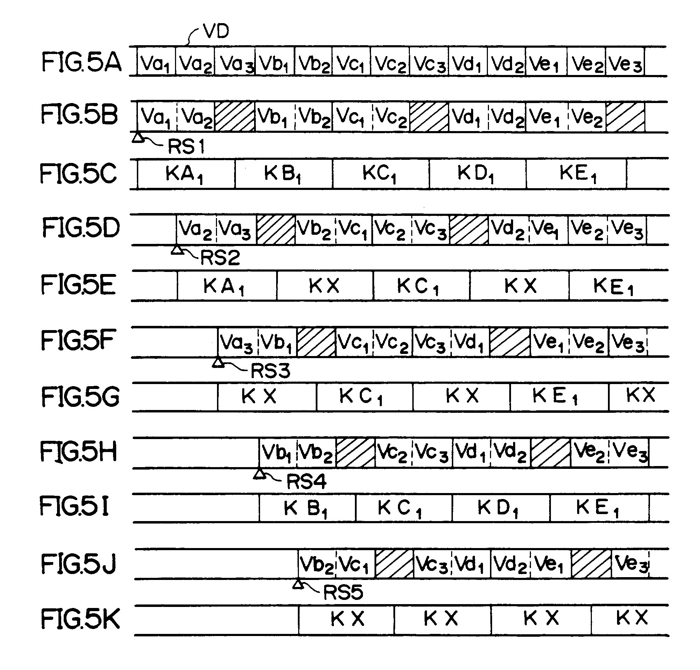

In the case where the television video signal VD subjected to "tele-cine" work as shown in FIGS. 5A through 5K is recorded on the movie film again with the electron beam image recording processing device 10, as shown in FIGS. 5B, 5D, 5F, 5H and 5J five different frame number reverse conversion processes are carried out depending on the time instants when the change-over control circuit 13 is reset in response to the operation of the reset switch.

That is, in FIG. 5B, reset is made with the timing RS1 of the top field of the images Va₁, Va₂ and Va₃ of the television video signal VD corresponding to the image KA of the first frame of the movie film converted for three fields.

As a result, the images Va₁ and Va₂ of the television video signal for two fields are written in the first frame memory 14, and the image Va₃ of the television video signal for the next one field is dropped. The images Vb₁ and Vb₂ of the television video signal for the following two fields are written in the second frame memory 15. Thereafter, the above-described operation is carried out for every television video signal VD for five (5) fields.

As a result, the images Va₁, Va₂, Vb₁, Vb₂, ... of the television video signal VD are applied to the EBR 19, whereby the frame number reverse conversion process is carried out correctly. That is, as shown in FIG. 5C, in correspondence to the images KA, KB, KC, KD, KE, ... of the original movie film, new images KA₁, KB₁, KC₁, KD₁, KE₁, ... obtained through image composition process and special effect process are recorded on a new movie film.

In FIG. 5D, reset is made with the timing RS2 of the second field of the images Va₁, Va₂ and Va₃ of the television video signal VD corresponding to the image KA of the first frame of the movie film converted for three fields.

As a result, the images Va₂ and Va₃ of the television video signal for two fields are written in the first frame memory 14, and the image Vb₁ of the television video signal for the next one field is dropped. The images Vb₁ and Vc₁ of the television video signal VD for the following two fields are written in the second frame memory 15. Thereafter, the above-described operation is carried out for every television video signal VD for five (5) fields.

As a result, the images Va₂ , Va₃, Vb₂, Vc₁, ... of the television video signal VD are applied to the EBR 19, whereby the frame number reverse conversion process is not correctly carried out. That is, as shown in FIG. 5E, images KA₁, KX, KC₁, KX, KE₁, ... are recorded on a new movie film.

The images KA₁, KC₁, KE₁, ... correspond to the images KA, KC, KE, ... of the original movie film 1, whereas the images KX are unnatural, being compositions of adjacent images Vb₂ and Vc₁, Vd₂ and Ve₁, ... of the television video signal VD.

In FIG. 5F, reset is made with the timing RS3 of the third field of the images Va₁, Va₂ and Va₃ of the television video signal VD corresponding to the image KA of the first frame of the movie film 1 converted for three fields

As a result, the images Va₃ and Vb₁ of the television video signal VD for two fields are written in the first frame memory 14, and the image Vb₂ of the television video signal for the next one field is dropped. The images Vc₁ and Vc₂ of the television video signal VD for the following two fields are written in the second frame memory 15. Thereafter, the above-described operation is carried out for every television video signal VD for five (5) fields.

As a result, the images Va₃, Vb₁, Vc₁, Vc₂, ... of the television video signal VD are applied to the EBR 19, whereby the frame number reverse conversion process is not correctly carried out. That is, as shown in FIG. 5G, images KX, KC₁, KX, KE₁ ... are recorded on a new movie film.

In FIG. 5H, reset is made with the timing RS4 of the top field of the images Vb₁ and Vb₂ of the television video signal VD corresponding to the image KB of the movie film 1 converted for two fields.

As a result, the images Vb₁ and Vb₂ of the television video signal for two fields are written in the first frame memory 14, and the image Vc₁ of the television video signal for the next one field is dropped. The images Vc₂ and Vc₃ of the television video signal VD for the following two fields are written in the second frame memory 15. Thereafter, the above-described operation is carried out for every television video signal VD for five (5) fields.

As a result, the images Vb₁, Vb₂, Vc₂, Vc₃, ... of the television video signal VD are applied to the EBR 19, whereby the frame number reverse conversion process is correctly carried out. That is, as shown in FIG. 5I, in correspondence to the images KB, KC, KD, KE,... of the original movie film 1, images KB₁, KC₁, KD₁, KE₁... obtained through image composition process and special effect process are recorded on a new movie film.

In FIG. 5J, reset is made with the timing RS5 of the second field of the images Vb₁ and Vb₂ of the television video signal VD corresponding to the image KB of the movie film converted for two fields.

As a result, the images Vb₂ and Vc₁ of the television video signal for two fields are written in the first frame memory 14, and the image Vc₂ of the television video signal for the next one field is dropped. The images Vc₃ and Vd₁ of the television video signal VD for the following two fields are written in the second frame memory 15. Thereafter, the above-described operation is carried out for every television video signal VD for five (5) fields.

As a result, the images Vb₂, Vc₁, Vc₃, Vd₁, ... of the television video signal VD are applied to the EBR 19, whereby the frame number reverse conversion process is not correctly carried out. That is, as shown in FIG. 5K, images KX are recorded on a new movie film.

The images KA₁, KC₁, KE₁, ... correspond to the images KA, KC, KE, ... of the original movie film 1, whereas the images KX are unnatural, being compositions of adjacent images Vb₂ and Vc₁, Vd₂ and Ve₁, ... of the television video signal VD.

In the case where, with the movie film 1 described above, the images KX formed by composition of adjacent images of the television video signal VD are applied to the EBR 19 as was described with reference to FIG. 5C, 5E, 5G and 5K a white image (or black image) and a gray image appear alternately on the monitor device 18, or only the gray image appears on it. Hence, it can be detected from this phenomenon with ease that the frame number reverse conversion is not correctly carried out.

In the case where, on the other hand, in correspondence to the image KA, KB, KC, KD, KE, ... of the original movie film 1, the images KA₁, KB₁, KC₁, KD₁, KE₁, ... obtained through image composition process and special effect process are applied to the EBR 19, a white image and a black image appear alternately on the monitor device 18. Hence, it can be determined from this phenomenon that the frame number reverse conversion is correctly carried out.

Accordingly, in the case where a white image (or black image) and a gray image appear alternately on the monitor device 18 or only the gray image appears on it, the operator of the electron beam image recording processing device 10 should operates as follows: That is, with the reset switch 13A operated it is confirmed the fact that a white image and a black image appear alternately on the monitor device 18 with the reset switch 13A operated, to start the electron beam image recording operation. In this case, in correspondence to the images of the original movie film 1, new images obtained through image composition process and special effect process are recorded on a new movie film.

### (4) Effects of the Embodiment

As was described above, in the movie film, the film region of two feeds, connected to the leader part 2, is formed into the identification film part 3 consisting of a series of thirty-two frames in which white frames K_{W} and black frames K_{B} are arranged alternately. Hence, in the case where the images of a movie film are converted into television video signals, and the television video signal thus obtained are subjected to video signal processing as required so that the images are recorded on a new movie film; their correspondence to those of the original movie film 1 can be detected with ease.

In this connection, with the movie film 1 of the invention, the electron beam image recording process including the "tele-cine" work can be simplified greatly.

### (5) Other Embodiments

(5-1) In the above-described embodiment, the identification film part is a series of thirty-two frames in which the white frame K_{W} which is of a white solid pattern PW and the black frame K_{B} which is of a black solid pattern PB are arranged alternately; however, the invention is not limited thereto or thereby. For instance, adjacent frames may be so designed that they are different in color, or different in geometrical pattern. That is, all that is necessary here is to design the adjacent frames so that it can be detected whether or not the frame number reverse conversion process is carried out correctly.
(5-2) In the above-described embodiment, the identification film part is a series of thirty-two frames in which the white frame K_{W} and the black frame K_{B} are arranged alternately; however, the length of the identification part is not limited thereto or thereby. That is, as the case may be, other lengths may be employed for the same effects.
(5-3) In the above-described embodiment, the identification film part is connected to the film body exposed and developed; however, instead, the following method may be employed: An identification film part is formed by using the top portion of a movie film which is not exposed yet, and thereafter the remaining portion of the movie film is used, as a film body, for photographing.
(5-4 ) In the above-described embodiment, the operator detects the timing of starting the electron beam image recording process by visually watching the screen of the monitor device; however, the invention is not limited thereto or thereby. For instance, by observing the video signals with an oscilloscope or the like, the above-described effects can be obtained substantially. (5-5) In the above-described embodiment, the operator detects the timing of start of the electron beam image recording process by visually watching the screen of the monitor device to reset the electron beam image recording processing device; however, the invention is not limited thereto or thereby. That is, the same effect can be obtained by setting the VTR playback start field with a time code or the like in response to the timing of start of the electron beam image recording process.

## Claims

1. A method for processing a movie film image in which a first film image is converted into a first video signal with 2-3 pulldown conversion, said film comprising:
an identification film portion (3) alternately disposing first frames (K_{W}) and second frames (K_{B}) on a portion of said movie film (1),
said first frame (K_{W}) being formed with a first pattern which is detectable from said first television video signal converted with 2-3 pulldown conversion,
said second frame (K_{B}) being formed with a second pattern which is different from said first pattern, is detectable from said first television video signal, and is distinguishable from said first pattern,
**characterized in that**
subsequent to said first television video signal there is performed a predetermined video signal process and a reverse 2-3 pulldown conversion into a second processed film image so that said second processed film image is recorded on a movie film fed at a feed speed of 24 frames per second.

2. A method according to claim 1, said first and second patterns being formed with a mono-tone pattern which can be identified from said first television video signal which is 2-3 pulldown converted.

3. A method according to claim 1, said first and second patterns being formed with a color pattern which can be identified from said first television video signal which is 2-3 pulldown converted.

4. A method according to claim 1, said first and second patterns being formed with a geometrical pattern which can be identified from said first television video signal which is 2-3 pulldown converted.

5. A method according to any one of claims 1 to 4, said identification film portion (3) being formed as a result of recording said first and second frames (K_{W}, K_{B}) on a predetermined bare film portion of said movie film (1) before recording.

6. A method according to any one of claims 1 to 4, said identification film portion (3) being provided as a result of connecting said first and second frames (K_{W}, K_{B}) with a predetermined film portion of said movie film (1) after recording.

7. A method according to any one of claims 1 to 4, said identification film portion (3) being provided as a result of connecting said first and second frames (K_{W}, K_{B}) with a predetermined film portion of said movie film (1) after developing.

8. A television video signal converting apparatus having first select circuit (12) for selecting output signals to first or second output terminals of an input signal (S_{VD}) which is 2-3 pulldown converted of a film image,
first memory circuit (14) being connected to said first output terminal (T2) and memorizing a frame portion of said input signal (S_{VD}),
second memory circuit (15) being connected to said second output terminal (T4) and memorizing another frame portion of said input signal (S_{VD}),
second select circuit (16) for selecting output signals (S_{VD1}) of said first and second memory circuits (14, 15) and outputting said output signals,
said first and second select circuits (12, 16) being controlled by means of a vertical synchronizing signal of said input signal so as to obtain a video signal for two fields corresponding to one frame of said movie film (1) from said second select circuit (16), comprising:
a control means (13) involving a dividing means for dividing pulses with 1/5 frequency division, said pulses being generated by means of said vertical synchronizing signal of said input signal and having 1/60 (sec) period,
said control means (13) outputting a first control signal (S_{SEL1}) in accordance with an output signal of said dividing means which generate said output signal during five field intervals sequentially after resetting and a second control signal in accordance with pulses having 1/24 (sec) period generated from pulses having 1/60 (sec) period,
said first control signal (S_{SEL1}) controlling said first select circuit (12) so that said first select circuit (12) outputs said input signal (V_{D}) from said first output terminal (T2) during first and second field periods, said first select circuit (12) outputs nothing from said first and second output terminals (T2, T4) during a third field period, and said first select circuit (12) outputs said input signal (V_{D}) from said second output terminal (T4) during fourth and fifth periods,
said second control signal (S_{SEL2}) controlling said second select circuit (16) so that said second select circuit (16) outputs output signals of said first and second memory circuits (14, 15) as output signal of said second select circuit (16),
a monitor means (18) for monitoring that said second select circuit (16) outputs said television video signal (V_{VD1}) corresponding to first and second patterns (PW, PB) of said frames for identifying said frames provided alternately on said predetermined portions of said movie film (1); and
a resetting means (13A) for resetting said dividing means when said monitor means (18) monitors said first and second pattems in said output signal for one frame of said second selecting circuit (16).

## Patentansprüche

1. Verfahren zur Verarbeitung eines Bewegtbildfilmbildes, bei dem ein erstes Filmbild in ein erstes Videosignal durch 2-3-pulldown-Umsetzung umgesetzt wird, wobei der Film aufweist:
einen Identifikationsfilmabschnitt (3), der abwechselnd ein erstes Vollbild (K_{W}) und ein zweites Vollbild (K_{B}) auf einen Abschnitt des Bewegtbildfilmes (1) zeigt,
wobei das erste Vollbild (K_{W}) mit einem ersten Muster gebildet wird, das von dem ersten, mittels 2-3 pulldown-Umsetzung umgesetzten Fernseh-Videosignal erfaßbar ist,
das zweite Vollbild (K_{B}) mit einem zweiten Muster gebildet ist, das unterschiedlich ist von dem ersten Muster und erfaßbar ist von dem ersten Fernseh-Videosignal und von dem ersten Muster unterscheidbar ist,
**dadurch gekennzeichnet,**
daß anschließend an das erste Fernseh-Videosignal ein festgelegtes Videosignalverfahren und eine umgekehrte 2-3-pulldown-Umsetzung in ein zweites verarbeitetes Filmbild ausgeführt wird, so daß das zweite verarbeitete Filmbild auf einem Bewegtbildfilm aufgezeichnet wird, der mit einer Vortriebsgeschwindigkeit von 24 Vollbildern pro Sekunde angetrieben wird.

2. Verfahren gemäß Anspruch 1,
wobei das erste und zweite Muster mit einem einfarbigen Muster gebildet wird, das von dem ersten Fernseh-Videosignal identifiziert werden kann, das 2-3-pulldown-umgesetzt ist.

3. Verfahren gemäß Anspruch 1,
wobei das erste und zweite Muster mit einem Farbmuster gebildet wird, das von dem ersten Fernseh-Videosignal identifiziert werden kann, das 2-3-pulldown-umgesetzt ist.

4. Verfahren gemäß Anspruch 1,
wobei das erste und zweite Muster mit einem geometrischen Muster gebildet wird, das von dem ersten Fernseh-Videosignal identifiziert werden kann, das 2-3-pulldown-umgesetzt ist.

5. Verfahren gemäß einem der Ansprüche 1 bis 4,
wobei der Identifikationsfilmabschnitt (3) aufgrund der Aufzeichnung des ersten und zweiten Vollbildes (K_{W}, K_{B}) auf einem leeren Filmabschnitt des Bewegtfilmbildes (1) vor der Aufzeichnung gebildet wird.

6. Verfahren gemäß einem der Ansprüche 1 bis 4,
wobei der Identifikationsfilmabschnitt (3) durch Verbinden des ersten und zweiten Vollbildes (K_{W}, K_{B}) mit einem festgelegten Filmabschnitt des Bewegtbildfilmes (1) nach der Aufzeichnung gebildet wird.

7. Verfahren gemäß einem der Ansprüche 1 bis 4,
wobei der Identifikationsfilmabschnitt (3) durch Verbinden des ersten und zweiten Vollbildes (K_{W}, K_{B}) mit einem festgelegten Filmabschnitt des Bewegtbildfilmes (1) nach der Entwicklung gebildet wird.

8. Fernseh-Videosignalumsetzvorrichtung mit einer ersten Auswahlschaltung (12) zur Auswahl von Ausgangssignalen zu einem ersten oder zweiten Ausgangsanschluß eines Eingangssignales (S_{VD}), das von einem Filmbild 2-3-pulldown-umgesetzt ist,
einer ersten Speicherschaltung (14), die mit dem ersten Ausgangsanschluß (T2) verbunden ist und einen Bildabschnitt des Eingangssignales (S_{VD}) speichert,
einer zweiten Speicherschaltung (15), die mit dem zweiten Ausgangsanschluß (T4) verbunden ist und einen weiteren Bildabschnitt des Eingangssignales (S_{VD}) speichert,
einer zweiten Auswahlschaltung (16) zur Auswahl von Ausgangssignalen (S_{VD1}) von der ersten und zweiten Speicherschaltung (14, 15) und zur Ausgabe dieser Ausgangssignale,
wobei die erste und zweite Auswahlschaltung (12, 16) mittels eines Vertikal-Synchronisierungssignales des Eingangssignales gesteuert wird, um ein Videosignal für zwei Halbbilder entsprechend einem Vollbild des Bewegtbildfilmes (1) von der zweiten Auswahlschaltung (16) zu erhalten, aufweisend:
eine Steuereinrichtung (13) aufweisend eine Untersetzereinrichtung zur Aufteilung von Pulsen durch 1/5-Frequenzteilung, wobei die Pulse mittels des Vertikal-Synchronisierungssignales des Eingangssignales erzeugt werden und eine Periode von 1/60 Sekunde aufweisen,
wobei die Steuereinrichtung (13) ein erstes Steuersignal (S_{SEL1}) in Übereinstimmung mit einem Ausgangssignal der Untersetzereinrichtung ausgibt, welche das Ausgangssignal während fünf Halbbildintervallen aufeinanderfolgend nach Zurücksetzung eines zweiten Steuersignales in Übereinstimmung mit Pulsen einer Periode von 1/24 Sekunde, die aus Pulsen mit einer Periode von 1/60 Sekunde erzeugt werden, erzeugt,
wobei das erste Steuersignal (S_{SEL1}) die erste Auswahlschaltung (12) derart steuert, daß die erste Auswahlschaltung (12) das Eingangssignal (V_{D}) am ersten Ausgangsanschluß (T2) während der ersten und zweiten Halbbildperiode ausgibt, die erste Auswahlschaltung (12) während der dritten Halbbildperiode nichts am ersten und zweiten Ausgangsanschluß (T2, T4) ausgibt und die erste Auswahlschaltung (12) das Eingangssignal (V_{D}) am zweiten Ausgangsanschluß (T4) während der vierten und fünften Periode ausgibt,
wobei das zweite Steuersignal (S_{SEL2}) die zweite Auswahlschaltung (16) derart steuert, daß die zweite Auswahlschaltung (16) Ausgangssignale der ersten und zweiten Speicherschaltung (14, 15) als Ausgangssignal der zweiten Auswahlschaltung (16) ausgibt,
eine Überwachungseinrichtung (18) zur Überwachung, daß die zweite Auswahlschaltung (16) das Fernseh-Videosignal (V_{VD1}) entsprechend dem ersten und zweiten Muster (PW, PB) der Vollbilder zur Identifizierung der abwechselnd auf den festgelegten Abschnitten des Bewegtbildfilmes (1) vorgesehenen Vollbildern ausgibt; und
eine Zurücksetzungseinrichtung (13A) zur Zurücksetzung der Untersetzereinrichtung, wenn die Überwachungseinrichtung (18) das erste und zweite Muster in dem Ausgangssignal für ein Vollbild der zweiten Auswahlschaltung (16) überwacht.

## Revendications

1. Procédé de traitement d'une image de film de cinéma dans lequel une première image de film est convertie en un premier signal vidéo à l'aide d'une conversion d'abaissement 2-3, ledit film comprenant:
une partie de film d'identification (3) disposant en alternance des premières images (K_{W}) et des secondes images (K_{B}) sur une partie dudit film de cinéma (1);
ladite première image (K_{W}) étant formée à l'aide d'un premier motif qui peut être détecté à partir dudit premier signal vidéo de télévision converti à l'aide d'une conversion d'abaissement 2-3 ;
ladite seconde image (K_{B}), qui est formée à l'aide d'un second motif qui est différent dudit premier motif, peut être détectée à partir dudit premier signal vidéo de télévision et peut être distinguée dudit premier motif,
caractérisé en ce que :
suite audit premier signal vidéo de télévision, un traitement de signal vidéo prédéterminé et une conversion d'abaissement 2-3 inverse sont réalisés de manière à obtenir une seconde image de film traitée de telle sorte que ladite seconde image de film traitée soit enregistrée sur un film de cinéma alimenté à une vitesse d'alimentation de 24 images par seconde.

2. Procédé selon la revendication 1, lesdits premier et second motifs étant formés à l'aide d'un motif mono-ton qui peut être identifié à partir dudit premier signal vidéo de télévision qui est converti par abaissement 2-3.

3. Procédé selon la revendication 1, lesdits premier et second motifs étant formés à l'aide d'un motif couleur qui peut être identifié à partir dudit premier signal vidéo de télévision qui est converti par abaissement 2-3.

4. Procédé selon la revendication 1, lesdits premier et second motifs étant formés à l'aide d'un motif géométrique qui peut être identifié à partir dudit premier signal vidéo de télévision qui est converti par abaissement 2-3.

5. Procédé selon l'une quelconque des revendications 1 à 4, ladite partie de film d'identification (3) étant formée en tant que résultat de l'enregistrement desdites première et seconde images (K_{W}, K_{B}) sur une partie de film vierge prédéterminée dudit film de cinéma (1) avant enregistrement.

6. Procédé selon l'une quelconque des revendications 1 à 4, ladite partie de film d'identification (3) étant constituée en tant que résultat d'une connexion desdites première et seconde images (K_{W}, K_{B}) avec une partie de film prédéterminée dudit film de cinéma (1) après enregistrement.

7. Procédé selon l'une quelconque des revendications 1 à 4, ladite partie de film d'identification (3) étant constituée en tant que résultat d'une connexion desdites première et seconde images (K_{W}, K_{B}) avec une partie de film prédéterminée dudit film de cinéma (1) après développement.

8. Appareil de conversion de signal vidéo de télévision comportant un premier circuit de sélection (12) pour sélectionner des signaux de sortie sur des première ou seconde bornes de sortie d'un signal d'entrée (S_{VD}) qui est converti par abaissement 2-3 d'une image de film ;
un premier moyen de mémoire (14) étant connecté à ladite première borne de sortie (T2) et mémorisant une partie d'image dudit signal d'entrée (S_{VD}) ;
un second circuit de mémoire (15) étant connecté à ladite seconde borne de sortie (T4) et mémorisant une autre partie d'image dudit signal d'entrée (S_{VD}) ;
un second circuit de sélection (16) pour sélectionner des signaux de sortie (S_{VD1}) desdits premier et second circuits de mémoire (14, 15) et pour émettre en sortie lesdits signaux de sortie ;
lesdits premier et second circuits de sélection (12, 16) étant commandés au moyen d'un signal de synchronisation verticale dudit signal d'entrée de manière à obtenir un signal vidéo pour deux trames correspondant à une image dudit film de cinéma (1) provenant dudit second circuit de sélection (16), comprenant :
un moyen de commande (13) qui met en jeu un moyen de division pour diviser des impulsions selon une division en fréquence de 1/5, lesdites impulsions étant générées au moyen dudit signal de synchronisation verticale dudit signal d'entrée et présentant une période de 1/60-ième de seconde ;
ledit moyen de commande (13) émettant en sortie un premier signal de commande (S_{SEL1}) conformément à un signal de sortie dudit moyen de division qui génère ledit signal de sortie pendant cinq intervalles de trame séquentiellement après remise à l'état initial et un second signal de commande conformément à des impulsions présentant une période de 1/24-ième de seconde générées à partir d'impulsions présentant une période de 1/60-ième de seconde ;
ledit premier signal de commande (S_{SEL1}) commandant ledit premier circuit de sélection (12) de telle sorte que ledit premier circuit de sélection (12) émette en sortie ledit signal d'entrée (VD) depuis ladite première borne de sortie (T2) pendant des première et seconde périodes de trame, que ledit premier circuit de sélection (12) n'émette rien en sortie depuis lesdites première et seconde bornes de sortie (T2, T4) pendant une troisième période de trame et que ledit premier circuit de sélection (12) émette en sortie ledit signal d'entrée (V_{D}) depuis ladite seconde borne de sortie (T4) pendant les quatrième et cinquième périodes ;
ledit second signal de commande (S_{SEL2}) commandant ledit second circuit de sélection (16) de telle sorte que ledit second circuit de sélection (16) émette en sortie des signaux de sortie desdits premier et second circuits de mémoire (14, 15) en tant que signal de sortie dudit second circuit de sélection (16) ;
un moyen de surveillance (18) pour surveiller que ledit second circuit de sélection (16) émet en sortie ledit signal vidéo de télévision (V_{VD1}) correspondant à des premier et second motifs (PW, PB) desdites images pour identifier lesdites images produites en alternance sur lesdites parties prédéterminées dudit film de cinéma (1); et
un moyen de remise à l'état initial (13A) pour remettre à l'état initial ledit moyen de division lorsque ledit moyen de surveillance (18) surveille lesdits premier et second motifs dans ledit signal de sortie pour une seule image dudit second circuit de sélection (16).
